**Europäisches Patentamt**

**European Patent Office**

**Office européen des brevets**

(19)

(11) Veröffentlichungsnummer: **0 103 847**
B1

(12) ## EUROPÄISCHE PATENTSCHRIFT

(45) Veröffentlichungstag der Patentschrift:
07.12.88

(21) Anmeldenummer: **83109055.0**

(22) Anmeldetag: **14.09.83**

(51) Int. Cl.⁴: **G 01 C 21/12**, G 01 C 21/22

(54) **Navigationshilfe für ein Fahrzeug.**

(30) Priorität: **16.09.82 DE 3234292**

(43) Veröffentlichungstag der Anmeldung:
**28.03.84 Patentblatt 84/13**

(45) Bekanntmachung des Hinweises auf die Patenterteilung:
**07.12.88 Patentblatt 88/49**

(84) Benannte Vertragsstaaten:
**FR GB IT**

(56) Entgegenhaltungen:
**EP-A- 0 027 232**
**EP-A- 0 057 032**
**EP-A- 0 090 965**
**DE-A- 2 805 952**
**FR-A- 2 175 342**
**FR-A- 2 291 479**
**GB-A- 2 077 975**
**US-A- 4 022 969**

(73) Patentinhaber: **TELDIX GmbH, Grenzhöfer Weg 36 Postfach 105608, D-6900 Heidelberg 1 (DE)**

(72) Erfinder: **Rogge, Joachim, Dr.-Ing., Am Hang 7, D-6922 Meckesheim (DE)**

(74) Vertreter: **Kammer, Arno, Dipl.-Ing., TELDIX GmbH Postfach 10 56 08 Grenzhöfer Weg 36, D-6900 Heidelberg 1 (DE)**

**Beschreibung**

Die Erfindung betrifft ein Navigationsverfahren für ein Fahrzeug mit einer einen Richtungssensor und einen Weggeber enthaltenden Fahrzeugnavigationsanlage die nach dem Koppelnavigationsverfahren den augenblicklichen Standort ermittelt, mit einer Anzeigevorrichtung zur Anzeige der Richtung und der Entfernung zum Ziel und mit einer den Ausgangsort und den Zielort enthaltenden Landkarte, wobei bei Fahrtbeginn einer Ausweiteschaltung die wenigstens näherungsweisen Ausgangs- und Zielkoordinatenwerte durch Abtastung von auf der Karte oder der Karte zugeordneten Hilfsmitteln aufgebrachten maschinenlesbaren Markierungen eingegeben werden und wobei in der Fahrzeugnavigationsanlage daraus und aus den jeweiligen Standortkoordinaten fortlaufend die Richtung und Entfernung zum Ziel ermittelt wird.

In der älteren Patentanmeldung EP-A1 0 090 965 Stand der Technik nach Art 54 (3) EPü wird ein derartiges Verfahren zur Eingabe der Koordinaten des Start- und Zielortes bei einem nach dem Prinzip der Koppelnavigation arbeitenden automatischen Leitsystem für Fahrzeuge beschrieben, bei dem die Koordinaten mittels eines optischen oder magnetischen Code-Lesers von einer mit einem Strichkode versehenen Vorlage in das System eingegeben werden.

Zur Eingabe wird der Code-Leser über die mit der Strichkodierung versehene Vorlage (Karte oder transparente Folie) in der Richtung vom Start- zum Zielort geführt.

Bei diesem Verfahren wird die Richtung und die Entfernung zum Ziel angezeigt. Da das Fahrzeug seinen Weg zum Ziel auf den vorhandenen Strassen zurücklegen muss, wird häufig eine zur Fahrtrichtung unterschiedliche Richtung angezeigt.

Aufgabe der Erfindung ist es, das eingangs beschriebene Navigationsverfahren dahingehend abzuwandeln, dass eine dem tatsächlichen Strassenverlauf annähernd entsprechende Anzeige der Zielrichtung erhalten wird. Diese Aufgabe wird durch die im ersten Patentanspruch angegebenen Merkmale gelöst.

Um eine dem tatsächlichen Strassenverlauf annähernd entsprechende Anzeige zu erhalten, werden zusätzlich zu den Koordinaten des Start- und Zielortes die Koordinaten von Zwischenzielen in die Fahrzeugnavigationsanlage z.B. durch Abtastung eingegeben. Die Ausweiteschaltung ermittelt durch Koppelrechnung aus den Koordinaten des augenblicklichen Standortes und den Koordinaten des Zwischenziels die Zwischenzielrichtung. Diese Zwischenzielrichtung wird durch den Richtungsanzeiger so lange dargestellt, bis das Zwischenziel erreicht wurde und durch die Umschalteinrichtung der Ausweiteschaltung die Koordinaten des nächsten Zwischenziels oder des Zielpunktes zugeführt werden. Nun ermittelt die Ausweiteschaltung aus den Koordinaten des augenblicklichen Standortes und den Koordinaten des nächsten Zwischenziels oder des Zielpunktes die nächste Zwischenzielrichtung oder die Richtung zum Zielpunkt, die durch den Richtungsanzeiger wieder dargestellt wird.

Weitere Vorteile ergeben sich aus den abhängigen Ansprüchen und aus dem Ausführungsbeispiel.

Die Erfindung wird anhand des in der Zeichnung dargestellten Beispiels mehr erläutert.

Es zeigen

Fig. 1 eine Anordnung der Elemente einer Fahrzeugnavigationsanlage in einem Blockdiagramm,

Fig. 2 den Ausschnitt einer Landkarte mit bezifferten markanten Geländepunkten.

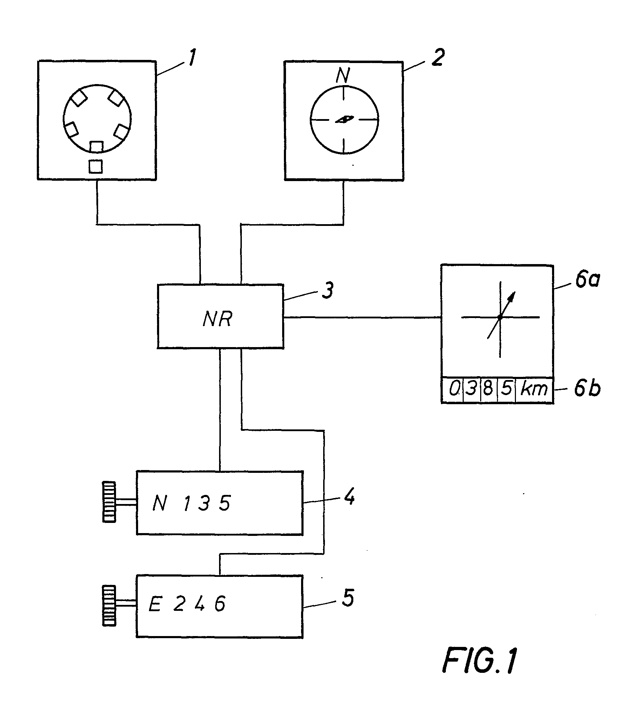

Die Fahrzeugnavigationsanlage wie in Fig. 1 dargestellt, enthält einen Weggeber 1 zur Anzeige des zurückgelegten Weges und einen Richtungssensor 2, beispielsweise eine Erdfeldmesssonde. Die Signale dieser Messwertgeber 1, 2 werden einem Navigationsrechner 3 zugeführt. An dem Navigationsrechner 3 sind ausserdem je ein Eingabegerät für Nordkoordinaten 4 und Ostkoordinaten 5 angeschlossen. Ein Richtungsanzeiger 6a erhält ein von dem Navigationsrechner 3 gebildetes Ausgangssignal und zeigt die Zielrichtung an. Ein Entfernungsanzeiger 6b stellt die Zielentfernung dar. Nachfolgend wird die Funktionsweise beschrieben.

Vor Beginn einer Fahrt werden durch Abtastung mittels einer optischen oder mangetischen Abtasteinrichtung (nicht dargestellt) die Standortkoordinaten, die Koordinaten von auf dem Weg zum Ziel liegenden Zwischenzielen sowie die Zielkoordinaten der aufbereiteten Karte entnommen und in die Fahrzeugnavigationsanlage eingegeben. Der Navigationsrechner 3 ermittelt daraus die Richtung und die Entfernung zum nächsten Zwischenziel. Beides wird mit der Anzeigeeinrichtung 6 dargestellt.

Während der Fahrt wird mit den Messwerten von Weggeber 1 und Richtungssensor 2 von dem Navigationsrechner 3 eine Koppelrechnung durchgeführt und kontinuierlich Richtung und Entfernung zwischen momentanem Standort und nächstem Zwischenziel oder Ziel ermittelt. Der Richtungsanzeiger 6a stellt sich entsprechend den zugeführten Werten kontinuierlich nach, d.h. bis zum Erreichen des Ziels wird immer die Richtung zum Zwischenziel bzw. Ziel angezeigt. Ferner wird noch die Entfernung zum Zwischenziel bzw. zum Ziel mit dem Entfernungsanzeiger 6b angezeigt.

Um zu erkennen, ob ein Zwischenziel erreicht ist, ist eine optische oder akustische Warneinrichtung vorgesehen, die, falls eine gewisse Übereinstimmung der durch die Koppelrechnung gebildeten Koordinaten mit den Koordinaten des Zwischenziels besteht, ein Signal abgibt. Aufgrund dieses Signals wird nun die Richtung und die Entfernung zum nächsten abgespeicherten Zwischenziel angezeigt. Um das Eingeben der Koordinatenwerte der Zwischenziele zu erleichtern, enthält die Karte auch die Koordinatenwerte der Zwischenziele in kodierter Form, beispielsweise ebenfalls am Kartenrand als Strichkode.

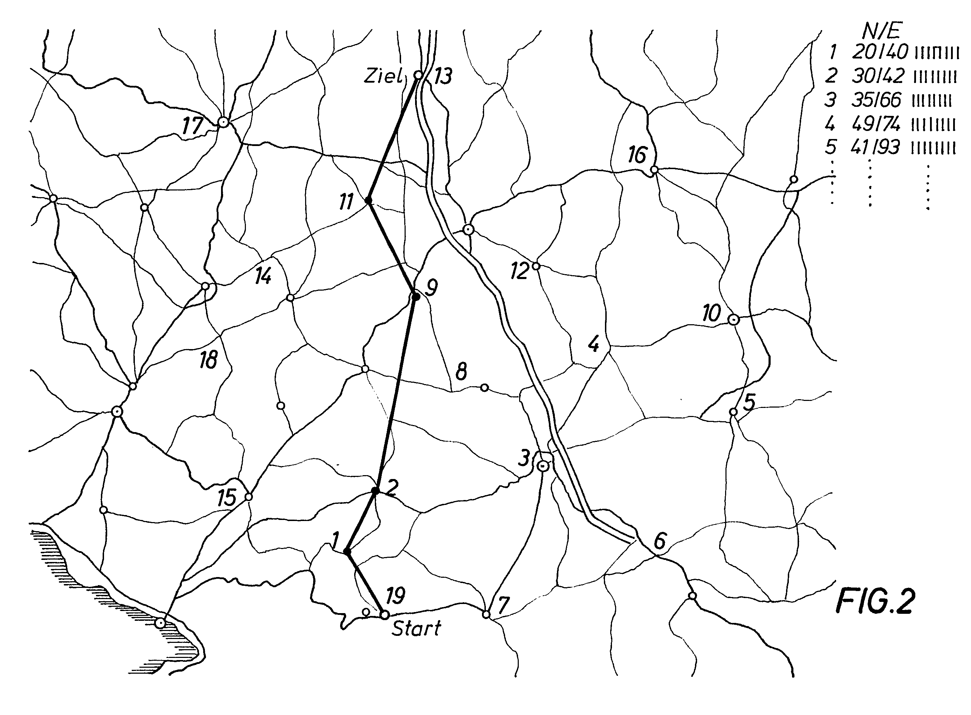

Fig. 2 zeigt einen Ausschnitt einer solchen aufbereiteten Landkarte. Diese Landkarte ist mit Ziffern versehen, die vorzugsweise an markanten Geländepunkten oder Strassenkreuzungen angeordnet sind. Diesen Ziffern sind am Rande der Landkarte die entsprechenden Koordinatenwerte der markanten Geländepunkte zugeordnet. Die Koordinatenwerte können direkt in Zahlenwerten und/oder im Strichkode angegeben werden.

Anhand dieser Koordinatenwerte werden zu Beginn einer Fahrt die Startposition 19, die Positionen der Zwischenziele 1, 2, 9, 11 und die Zielposition 13 durch Abtasten eingegeben, indem die Abtasteinrichtung über die Positionen der den jeweiligen Ziffern zugeordneten Kodes geführt wird, womit eine rasche Eingabe der Koordinaten möglich ist.

Es hat sich gezeigt, dass eine besonders einfache Anwendung des Strichkodes dadurch erreicht wird, dass dieser auf einer Magnet- oder anderer das Kartenbild nicht beeinträchtigender Folie aufgebracht ist und diese Folie derart mit der Karte in Verbindung gebracht ist, dass der Strichkode den markanten Punkten der Karte, denen er zugeordnet ist, entspricht. Damit ist es möglich, mit der optischen oder magnetischen Abtasteinrichtung zur Startvorbereitung lediglich an den verschiedenen Punkten, die die Zwischenziele bzw. das Ziel darstellen, entlang zu fahren; eine Überwachungsanzeige zeigt daraufhin den Punkt an zur Feststellung, ob der richtige Ort eingegeben wurde; dieser wird anschliessend abgespeichert.

Eine weitere Erleichterung zur Erkennung der Fahrstrecke wird auch dadurch geschaffen, dass am Kartenrand oder auf einem gesonderten Blatt bzw. in abgespeicherter Form Zusatzinformationen vorgesehen sind, die vor Beginn der Fahrt entsprechend dem Ziel oder den Zwischenzielen eingegeben werden. Bei Erreichen oder Anfahren des Ziels oder Zwischenziels wird dann diese Zusatzinformation angezeigt und gibt beispielsweise an, dass eine Einmündung folgt, eine Seitenstrasse befahren werden muss oder den Hinweis auf eine Brücke, Kirche o.ä. Ausserdem können der Name des Ziels oder Zwischenziels (Zielsymbol) und die nächsten Vorgehensschritte angezeigt werden. Aus der Auflistung dieser Beispiele wird deutlich, dass eine Fahrstrecke mit dieser Navigationshilfe in beliebigem Umfang mit Informationen bestückt werden kann, die es dem Fahrer erleichtern, durch Anzeige dieser Information, in sequentieller Folge das Ziel zu finden.

**Patentansprüche**

1. Navigationsverfahren für ein Fahrzeug mit einer einen Richtungssensor und einen Weggeber enthaltenden Fahrzeugnavigationsanlage, die nach dem Koppelnavigationsverfahren den augenblicklichen Standort ermittelt, mit einer Anzeigevorrichtung zur Anzeige der Richtung und der Entfernung zum Ziel und mit einer den Ausgangsort und den Zielpunkt enthaltenden Landkarte, wobei bei Fahrtbeginn einer Auswerteschaltung die wenigstens näherungsweisen Ausgangs- und Zielkoordiantenwerte durch Abtastung von auf der Karte oder auf der Karte zugeordneten Hilfsmitteln (Folie) aufgebrachten maschinenlesbaren Markierungen eingegeben werden, und wobei in dieser daraus und aus den jeweiligen Standortkoordinaten fortlaufend die Richtung und Entfernung zum Ziel ermittelt wird, dadurch gekennzeichnet, dass die Koordinaten wenigstens eines Zwischenziels (1, 2, 9, 11) der Auswerteschaltung (3, 4, 5, 6) zugeführt werden, wobei bis zum Erreichen des Zwischenziels die Auswerteschaltung aus den von der Fahrzeugnavigationsanlage ermittelten augenblicklichen Standortkoordinaten und den Koordinaten des Zwischenziels jeweils die Zwischenzielrichtung ermittelt und auf der Anzeigevorrichtung anzeigt und dass eine Umschalteinrichtung vorgesehen ist, die nach Erreichen des Zwischenziels in der Auswerteschaltung die Auswertung der Koordinaten des nächsten Zwischenziels oder des Zielpunktes zur Bildung der neuen Zwischenzielrichtung oder der Zielrichtung veranlasst.

2. Navigationsverfahren nach Anspruch 1, dadurch gekennzeichnet, dass die Landkarte oder die Hilfsmittel an als möglichen Zwischenzielen dienenden markanten Punkten (Kreuzungen, Brücken o.ä.) mit Ziffern versehen ist und diesen Ziffern die Koordinaten des jeweiligen Punktes zugeordnet sind.

3. Navigationsverfahren nach Anspruch 2, dadurch gekennzeichnet, dass die Koordinaten der jeweiligen Punkte in kodierter Form abgespeichert sind.

4. Navigationsverfahren nach Anspruch 3, dadurch gekennzeichnet, dass zusätzlich zu den Koordinaten des jeweiligen Punktes die Bezeichnung des Punktes (Name des Ortes, der Strasse) und/oder Zusatzsymbole wie beispielsweise Kreuzung, Einmündung, Brücke o.ä. in kodierter Form abgespeichert sind.

5. Navigationsverfahren nach Anspruch 3, dadurch gekennzeichnet, dass in kodierter Form Symboldarstellungen abgespeichert sind, die bei der Eingabe von Zielen oder Zwischenzielen ebenfalls eingegeben werden und beispielsweise Fahrbefehle enthalten.

6. Navigationsverfahren nach Anspruch 1 oder 2, dadurch gekennzeichnet, dass die Landkarte oder die Hilfsmittel an markanten Punkten mit Kodezeichen versehen sind, mittels denen die Koordinaten der jeweiligen Punkte eingegeben werden können.

7. Navigationsverfahren nach Anspruch 1 bis 6, dadurch gekennzeichnet, dass die Kodezeichen auf Magnetfolie aufgebracht sind.

8. Navigationsverfahren nach Anspruch 6, dadurch gekennzeichnet, dass mit der Auswerteschaltung ein Abtastgriffel verbunden ist, mit dem die Koordinaten der Zwischenziele und/oder des Zielpunktes erfasst und der Auswerteschaltung zugeführt werden.

**Claims**

1. A navigation method for a vehicle having vehicle navigation equipment containing a direction sensor and a displacement pick-up, which equipment determines the instantaneous position according to the dead-reckoning navigation method, having an indicator device for indicating the direction and the distance to the destination and having a map containing the starting point and the destination, wherein at the start of the journey the, at least approximate, starting and final destination co-ordinate data are fed into a computing circuit by scanning machine-readable markings applied to the map or to auxiliary means (film) associated with the map, and wherein in this computing circuit the direction and distance to the destination are continuously determined therefrom and from the actual location co-ordinates, characterised in that the co-ordinates of at least one intermediate destination (1, 2, 9, 11) are fed to the computing circuit (3, 4, 5, 6) wherein, until reaching the intermediate destination, the computing circuit determines in each case, the direction of the intermediate destination from the actual position co-ordinates determined by the vehicle navigation equipment and the co-ordinates of the intermediate destination, and indicates it on the indicator device, and in that a change-over device is provided which, on reaching the intermediate destination causes, in the computing circuit, the evaluation of the co-ordinates of the next intermediate destination or of the final destination for the formation of the new direction of the intermediate destination of the direction of the final destination.

2. A navigation method according to Claim 1, characterized in that the map or the auxiliary means is provided with characters at marked points (cross-roads, bridges and the like) serving as possible intermediate destinations and the co-ordinates of the actual point are associated with these characters.

3. A navigation method according to Claim 2, characterized in that the co-ordinates of the actual points are stored in coded form.

4. A navigation method according to Claim 3, characterized in that, in addition to the co-ordinates of the actual points, the designation of the point (name of the place, of the street) and/or additional symbols such as cross-roads, side-road crossing, bridge or the like, are stored in coded form.

5. A navigation method according to Claim 3, characterized in that symbolic representations are stored in coded form, which are also fed in during the input of the final destination and intermediate destinations and which contain, for example, driving instructions.

6. A navigation method according to Claim 1 or 2, characterized in that the map or auxiliary means are provided with code characters at marked points, by means of which characters the co-ordinates of the actual points can be fed in.

7. A navigation method according to Claims 1 to 6, characterized in that the code characters are applied on magnetic film.

8. A navigation method according to Claim 6, characterized in that a scanning pen is connected to the computing circuit, with which the co-ordinates of the intermediate destination and/or of the destination are picked up and fed into the computing circuit.

**Revendications**

1. Procédé de navigation pour un véhicule équipé d'une installation de navigation, comportant un détecteur de direction et un indicateur de la distance parcourue, qui détermine la position instantanée selon le procédé de navigation à l'estime, d'un dispositif d'indication pour indiquer la direction et l'éloignement du but, ainsi que d'une carte, notamment d'une carte routière contenant le lieu de départ et le point de destination, procédé selon lequel, au début du parcours, les coordonnées au moins approximatives du point de départ et du point de destination sont introduites dans un circuit d'exploitation par exploration de repères disposés sur la carte ou sur des moyens auxiliaires (feuille) adjoints à la carte, repères qui sont exploitables par une machine, et selon lequel la direction et l'éloignement du but sont déterminés en continu dans ce circuit à partir desdites coordonnées et à partir des coordonnées de la position instantanée, caractérisé en ce que les coordonnées d'au moins un but intermédiaire (1, 2, 9, 11) sont appliquées au circuit d'exploitation (3, 4, 5, 6), en ce que le circuit d'exploitation détermine chaque fois la direction du but intermédiaire, à partir des coordonnées de la position actuelle, déterminées par l'installation de navigation du véhicule, et à partir des coordonnées du but intermédiaire, et cette direction est indiquée sur le dispositif d'indication, jusqu'à ce que le but intermédiaire soit atteint, et en ce qu'un dispositif de commutation est prévu pour, après que le but intermédiaire a été atteint, amener le circuit d'exploitation à exploiter les coordonnées du but intermédiaire suivant ou du point de destination, afin d'établir la nouvelle direction du but intermédiaire ou afin d'établir la direction du but.

2. Procédé selon la revendication 1, caractérisé en ce que la carte ou les moyens auxiliaires est ou sont pourvu(s) de chiffres à des points marquants (croisements, ponts et lieux semblables), pouvant éventuellement servir de buts intermédiaires, et que les coordonnées du point en question sont affectées à ces chiffres.

3. Procédé selon la revendication 2, caractérisé en ce que les coordonnées des différents points sont mémorisées sous forme codée.

4. Procédé selon la revendication 3, caractérisé en ce que, en plus des coordonnées du point concerné, la désignation du point (le nom du lieu, de la rue) et/ou des symboles supplémentaires, tels que croisement, point débouchant sur une artère plus importante, pont et analogues, sont mémorisés sous forme codée.

5. Procédé selon la revendication 3, caractérisé par la mémorisation, sous forme codée, de représentations sous forme de symboles, qui sont également introduites lors de l'introduction de buts ou de buts intermédiaires et qui contiennent des instructions pour la conduite, par exemple.

6. Procédé selon la revendication 1 ou 2, caractérisé en ce que la carte ou les moyens auxiliaires est ou sont pourvu(s) de signes codés à des points marquants, au moyen desquels les coordonnées des points en question peuvent être introduites.

7. Procédé selon les revendications 1 à 6, caractérisé en ce que les signes codés sont appliqués sur une feuille magnétique.

8. Procédé selon la revendication 6, caractérisé en ce que le circuit d'exploitation est combiné avec un stylet d'exploitation au moyen duquel les coordonnées des buts intermédiaires et/ou du point de destination sont saisies et appliquées au circuit d'exploitation.

FIG.1

FIG.2

N/E
1  20140 ||||||||
2  30142 ||||||||
3  35166 ||||||||
4  49174 ||||||||
5  41193 ||||||||

EP 0 103 847 B1